# FASCICULE DE BREVET EUROPEEN

(11) **EP 2 364 954 B1**
(45) Date de publication et mention de la délivrance du brevet: **04.07.2018**
(21) Numéro de dépôt: 11152231.4
(22) Date de dépôt: 26.01.2011
(51) Int. Cl.: C02F 1/48, C02F 3/02, B01D 21/00, A61K 41/00

(54) **Système et procédé pour le traitement électromagnétique des eaux usées**
System und Verfahren zur elektromagnetischen Aufbereitung von Abwasser
System and method for electromagnetic treatment of wastewater

(30) Priorité: 19.02.2010 CH 2062010
(43) Date de publication de la demande: 14.09.2011
(73) Titulaire: Planet Horizons Technologies SA, 3960 Sierre (CH)
(72) Inventeur: Thut, Walter, 3978, Flanthey (CH); Valette, Eric, 1977, Icogne (CH); Masserey, Nicolas, 1950, Sion (CH); Faure, Charles-Henri, 1870, Monthey (CH)
(74) Mandataire: P&TS SA (AG, Ltd.)

(56) Documents cités:
- EP-A1- 1 676 815
- DE-A1- 3 836 155
- GB-A- 2 398 295
- US-A1- 2005 121 396
- US-A1- 2009 301 188

## Description

### Domaine technique

La présente invention concerne un système et un procédé pour le traitement électromagnétique des eaux usées dans les stations de traitement des eaux usées.

### Etat de la technique

La filière de traitement des eaux usées par boues activées est connue. Une station de traitement qui utilise cette filière comprend des prétraitements des eaux, c'est-à-dire le dégrillage (les barreaux d'une grille retiennent les déchets les plus grossiers), le dessablage (les matières lourdes se déposent sous l'effet de la pesanteur) et le déshuilage (un insufflateur d'air permet la remontée des matières légères et non miscibles aux eaux notamment les huiles). Après une décantation primaire, il y a enfin des traitements biologiques. Dans ces derniers, des bactéries, stimulées par un apport important d'oxygène, se nourrissent de la pollution organique.

A cet effet, dans un bassin d'aération alimenté en continu par les eaux usées se développe une culture bactérienne fixée sur les polluants organiques, formant une sorte de boue. Les eaux usées contenues dans ce bassin sont aérées et brassées à l'aide de turbines de surface ou d'insufflation d'air par le fond, afin de maintenir les bactéries en suspension et de leur fournir de l'oxygène.

Dans le bassin d'aération se produit donc un phénomène selon lequel les bactéries s'agglomèrent sur leur nourriture dès leur introduction dans le bassin, formant ainsi un floc bactérien. Dans certaines conditions la prolifération de ces bactéries est si importante que la taille du floc bactérien augmente considérablement.

Le mélange d'eau et de bactéries est ensuite envoyé à un bassin secondaire de décantation. Une partie des boues vivantes ou boues activées extraites du ce décanteur est recyclée dans le bassin d'aération. L'excédent est évacué comme déchet. Les boues résiduaires sont généralement gérées par épandage agricole, incinération ou plus rarement par stockage en décharge. Puisque la production de boues est en augmentation d'années en années et puisque l'espace disponible est en réduction, les solutions actuelles ne présentent pas une alternative durable. L'incinération est un procédé coûteux pour la communauté et elle est devenue souvent obligatoire puisque l'épandage a tendance à être interdit de plus en plus.

La production de boues dans une station de traitement des eaux usées est donc un problème important à nos jours. Par exemple en Europe les boues résiduaires urbaines représentent annuellement une production d'environ quinze millions de tonnes de matière sèche. Une possible solution à ce problème est la réduction des volumes de boues produites en excès.

Les solutions actuelles en réponse au problème du foisonnement d'une boue sont de nature chimique : l'utilisation d'agents toxiques comme le chlore ou le recours aux agents floculants comme les sels de fer ou d'aluminium. Ces solutions ont des limites connues : le chlore présente par exemple une toxicité envers des autres microorganismes qui participent activement au traitement des eaux usées. Les agents floculants sont onéreux et augmentent la quantité finale de boues.

Dans un bassin de décantation ou d'épaississement les boues se séparent des eaux usées. Une amélioration de la séparation des boues par décantation est aussi envisageable pour accélérer et rendre ainsi plus efficace la filière de traitement des eaux usées.

Le document GB2398295 décrit un dispositif pour le traitement électromagnétique d'un volume d'eau afin de changer les propriétés chimiques et physiques des ions de calcium et magnésium dissous dans l'eau de façon à ce qu'ils restent dans la solution même si l'eau traitée est chauffée. Le dispositif comprend un générateur de signaux électromagnétiques. Il est conçu pour être utilisé dans des lave-vaisselles, machines à laver, bouilloires électriques et distributeurs électriques et il n'est pas adapté pour un usage dans un bassin. En outre, dans le cas où le dispositif est immergé, le générateur est aussi immergé et contenu avec le dispositif dans un boîtier étanche.

Le document US20050121396 décrit un dispositif et une méthode pour traiter un liquide avec des ondes électromagnétiques comprenant des antennes fouet ou des antennes de transmission constituées par un ou plusieurs conducteurs autour d'une tige et qui sont à une certaine distance du liquide à traiter.

Le document WO0033954 décrit un dispositif pour améliorer des fluides avec l'application d'un ou plusieurs signaux RF combinés avec des impulsions à fréquence plus basse pour des applications telles que la production du ciment, du lait, du jus, de l'orge, de l'herbe, des crevettes, le traitement de l'essence, la combustion d'un fluide et l'élimination des bactéries. Le dispositif comprend une ou plusieurs antennes placées autour d'une tige conductrice et d'un anneau de support et contenues dans le conduit pour le fluide.

Le document EP1676815 concerne un procédé de traitement électromagnétique de liquides avec des antennes, dans des bassins tels que des bassins de décantation, d'épaississement ou de déshydratation des boues.

Il apparait donc indispensable de mettre au point un système intégré dans une station de traitement des eaux usées permettant de réduire la quantité des boues produites en excès et de mieux favoriser leur décantation.

La présente invention concerne un système et un procédé pour les stations de traitement des eaux usées dans lesquels des ondes électromagnétiques sont appliquées à ces eaux afin de réduire la quantité des boues produites en excès et de mieux favoriser leur décantation.

L'utilisation d'une onde électromagnétique dans un liquide comme l'eau est connue pour prévenir l'entartrage. On connait par exemple des systèmes qui utilisent des bobines pour protéger des conduites d'eau domestique ou industrielle pour éviter leur entartrage: ces bobines sont enroulées autour des conduites afin de transmettre un champ électromagnétique à l'eau qu'elles contiennent.

On connait aussi des systèmes qui utilisent des bobines disposées autour d'un support tubulaire transportant le liquide pour lui transmettre des ondes électromagnétiques. L'eau traitée peut ensuite être donnée aux animaux, aux plantes ou peut améliorer des procédés industriels, par exemple la production du ciment, des procédés de combustion, la production du lait, etc.

Des études effectuées dans le cadre de l'invention ont démontré que l'application d'une onde électromagnétique à des fréquences particulières génère une « action de stress » sur les bactéries qui vivent dans un bassin d'aération. Pour « action de stress » dans ce document on entend une action de l'onde électromagnétique sur les bactéries qui entraine une réduction de la production des boues en excès.

D'autres études ont démontré que l'application d'une onde électromagnétique à des fréquences particulières dans un bassin de décantation ou d'épaississement permet d'améliorer la décantation des boues. En effet les particules qui forment les boues secondaires dans le bassin de décantation ou d'épaississement sont colloïdales. Les bactéries participent à leur sédimentation gravitaire dès qu'elles se rassemblent en flocs. Ces particules se trouvent en suspension libre dans les eaux usées. La dispersion des particules est accentuée par le fait que ces particules sont chargées négativement. Pour obtenir une bonne décantation, il est donc nécessaire de favoriser le rapprochement des particules, afin de les aider à se grouper en flocs, et donc de réduire les forces répulsives. A l'interface solide/liquide de ces particules, il existe une couche. La différence de potentiel entre la frontière de cette couche est le potentiel Zeta, qui constitue une barrière d'énergie. Pour rapprocher ces particules, il faut abaisser la valeur de cette barrière et l'application d'une onde électromagnétique à des fréquences particulières dans un bassin de décantation ou d'épaississement permet de réduire ce potentiel et donc d'améliorer la décantation.

Pour appliquer une onde électromagnétique à un bassin, l'utilisation des systèmes connus par exemple pour le traitement du calcaire n'est pas envisageable. Un câble étanche autour du bassin qui travaille comme antenne fouet n'est pas pratique parce qu'il y a un risque d'accrochage du câble avec les ponts roulants. En plus le câble représente un obstacle gênant les opérations de nettoyage du bassin et son installation nécessite un vidage du bassin en perturbant son fonctionnement.

Il existe donc un besoin pour un système intégré dans un bassin d'aération de traitement des eaux usagées qui permette d'améliorer le procédé de traitement par boues activées en réduisant la quantité des boues produites en excès.

Il existe aussi un besoin d'améliorer la décantation des boues dans un bassin de décantation ou d'épaississement des eaux usées.

### Bref résumé de l'invention

Un but de la présente invention est de proposer un système et un procédé pour le traitement des eaux usées exempt des limitations connues.

Un autre but de l'invention est de proposer un système et un procédé pour le traitement des eaux usées à travers l'application d'un champ électromagnétique aux eaux d'un bassin d'aération.

Un autre but de l'invention est de proposer un système et un procédé pour le traitement des eaux usées à travers l'application d'un champ électromagnétique aux eaux d'un bassin de décantation ou d'épaississement.

Un autre but de l'invention est de proposer un système et un procédé pour le traitement des eaux usées qui ait un faible coût de fonctionnement.

Un autre but de l'invention est de proposer un système et un procédé pour le traitement des eaux usées qui soit plus écologique que les systèmes connus qui aboutissent à des accumulations de substances chimiques.

Un autre but de l'invention est de proposer un système pour le traitement des eaux usées qui permette une installation pratique dans un bassin sans perturber son fonctionnement et qui ne représente pas un obstacle gênant les opérations de nettoyage du bassin.

Selon l'invention, ces buts sont atteints notamment au moyen d'un système pour le traitement électromagnétique des eaux usées contenues dans un bassin selon la revendication 1.

Selon l'invention, ces buts sont atteints également au moyen d'un procédé pour le traitement électromagnétique des eaux usées selon la revendication 9.

Cette solution présente notamment l'avantage par rapport à l'art antérieur d'améliorer le procédé par boues activées, d'avoir un faible coût de fonctionnement, parce que la puissance requise n'est que de quelque dizaine de watts, et d'être plus écologique. L'installation du système pour le traitement des eaux usées dans un bassin selon l'invention est pratique, ne perturbe pas le fonctionnement du bassin et ne représente pas un obstacle gênant les opérations de son nettoyage.

### Brève description des figures

Des exemples de mise en oeuvre de l'invention sont indiqués dans la description illustrée par les figures annexées dans lesquelles :

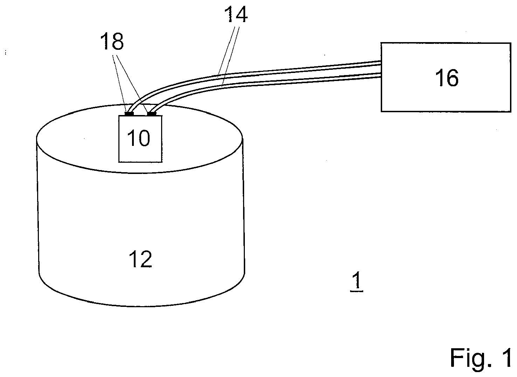

La figure 1 illustre le système pour le traitement électromagnétique des eaux usées comprenant un bassin 12, une antenne PCB 10, des câbles 14, un générateur des signaux électromagnétiques 16 et des connecteurs 18.
La figure 2 illustre une antenne PCB 10 avec deux pistes pour deux signaux électromagnétiques 102, 104 et avec des trous 106 pour la fixer aux parois du bassin directement ou grâce à un support non illustré réalisé à l'aide de longerons.
La figure 3 illustre une autre antenne PCB 10 avec une différente géométrie des pistes.
La figure 4 illustre un exemple de réalisation d'un support comprenant des longerons pour une antenne PCB selon l'invention.
La figure 5 illustre deux antennes PCB selon l'invention montées sur un exemple de réalisation d'un support comprenant des longerons.
La figure 6 illustre un possible schéma de câblage d'un boîtier de raccordement des antennes PCB (non illustrées) selon l'invention.
La figure 7 illustre une vue d'un boîtier de raccordement connecté à des antennes PCB selon l'invention.

### Exemple(s) de mode de réalisation de l'invention

Pour traiter électromagnétiquement les eaux usées contenues dans un bassin 12 selon l'invention, une antenne PCB 10 est utilisée.

Par antenne PCB on entend une antenne comprenant un support, en général une plaque en forme de rectangle ou de carré, réalisée en matériel isolant, par exemple une résine époxy, par exemple FR-4 ou FR-5, et munies d'une ou plusieurs couches de métal, par exemple en cuivre, séparées par un matériel isolant. Les couches de cuivre sont gravées par un procédé chimique pour obtenir un ensemble de pistes avec la géométrie désirée.

L'antenne PCB 10 utilisée dans le système objet de l'invention comprend au moins une couche conductrice, réalisée par exemple en métal ou alliage, par exemple en cuivre, sur laquelle est gravé un circuit de circulation de courant qui comprend au moins une piste pour un signal électromagnétique. Selon l'invention, le circuit de circulation de courant comprend deux pistes 102, 104 pour deux signaux électromagnétiques.

L'antenne 10 présente des caractéristiques particulières qui lui permettent d'être utilisée dans un bassin 12 des eaux usées. En effet, elle est fixée avec des moyens 106 sur les parois du bassin 12, soit directement par exemple en la vissant avec des vis aux parois du bassin 12 à travers des trous 106, soit grâce à un support réalisé à l'aide de longerons, comme on le verra plus loin. Cette antenne PCB 10 n'empêche donc pas le bon fonctionnement des ponts roulants.

Au cas où cette antenne 10 est fixée directement aux parois du bassin 12 à travers des vis et des trous 106, il est nécessaire de vider le bassin 12 pour effectuer son installation ou des éventuelles réparations. Au cas où cette antenne 10 est fixée aux parois du bassin 12 à travers un support réalisé à l'aide de longerons, il n'est pas nécessaire de vider le bassin 12 pour effectuer son installation ou des éventuelles réparations : en effet une ou plusieurs antennes 10 sont montées sur ce support réalisé à l'aide de longerons au dehors du bassin 12 ; le support est ensuite fixé aux parois du bassin 12 de façon à ce que la partie du support contenant les antennes soit totalement immergée et en même temps la partie du support contenant les moyens de fixation du support aux parois du bassin 12 ne soit pas immergée pour permettre cette fixation. Dans ce cas l'installation ou les éventuelles réparations des antennes PCT ne perturbent pas le fonctionnement d'un bassin d'aération, de décantation ou d'épaississement parce qu'il n'est pas nécessaire de vider ces bassins pour installer ou réparer l'antenne.

Cette antenne PCB présente en outre des autres caractéristiques pour son usage dans un bassin 12 : puisqu'elle est conçue pour être totalement immergée dans un bassin 12, elle est munie d'une couche isolante, par exemple une couche en époxy, polyéthylène ou PVC, par-dessus les pistes en métal, par exemple en cuivre ; cette couche lui confère l'étanchéité et aussi une bonne résistance mécanique.

Dans une variante l'antenne PCB a des grandes dimensions par rapport aux antennes PCB connues, par exemple 0,3-1,5 m par 0,3-3 m, de préférence 1 m par 2,3 m. Les dimensions dépendent du volume et du débit d'eaux usées à traiter, de la profondeur du bassin, et des fréquences des signaux électromagnétiques émis. Dans une autre variante l'antenne PCB a des plus petites dimensions, par exemple 0,3 m par 0,5 m, et plusieurs antennes sont reliées en série ou en parallèle de façon à obtenir le même effet qu'une seule grande antenne.

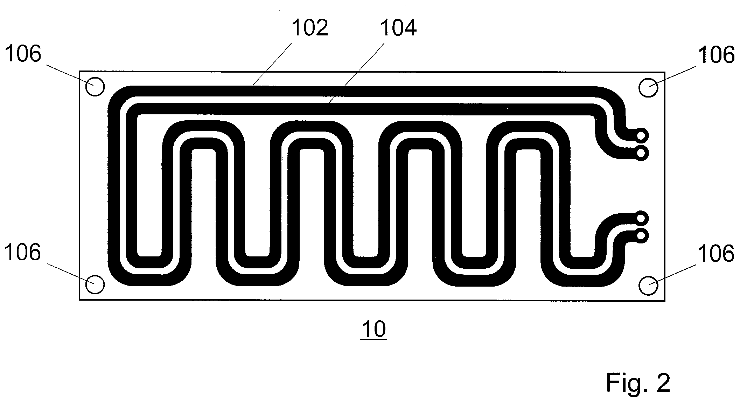

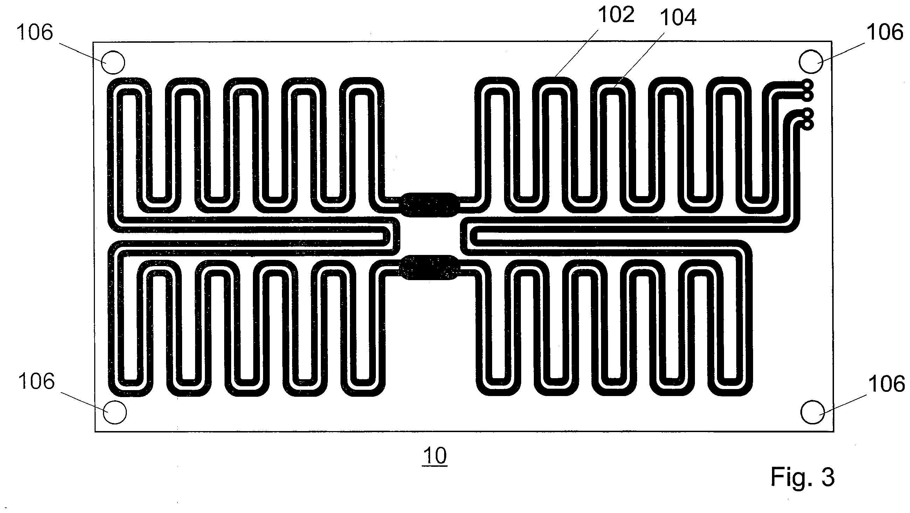

La géométrie de la piste pour le signal électromagnétique 102 peut varier selon les applications ; elle peut être optimisée par exemple selon la quantité d'eaux à traiter, selon la configuration des bassins ou selon la composition des eaux usées. La figure 2 illustre une possible géométrie des pistes. Dans l'exemple illustré, deux pistes sont prévues, l'une pour un premier signal 102 qui a une fréquence et l'autre pour un deuxième signal 104 qui a une fréquence différente. La figure 3 montre une autre géométrie possible.

Dans une variante, l'antenne PCB 10 comprend seulement une couche conductrice sur laquelle est gravé un circuit de circulation de courant qui comprend au moins deux pistes pour deux signaux électromagnétiques (configuration filaire). En augmentant la longueur de ces pistes, par exemple en reliant en série plusieurs antennes, l'effet du champ électromagnétique devient plus efficace. Dans une autre variante une autre couche conductrice, par exemple en cuivre, sans gravure, est placée sur la surface de l'antenne opposée à celle comprenant les pistes. Dans une autre variante l'antenne comprend seulement une couche conductrice, par exemple en cuivre, sans gravure. Dans une dernière variante l'antenne comprend une configuration filaire sur chacune des deux surfaces. Dans ce cas deux fréquences différentes sont utilisées sur les deux surfaces.

Cette antenne PCB dans une variante peut être reliée en série avec d'autres antennes PCB du même type fixées sur les parois du bassin 12 soit directement soit à travers un support réalisé à l'aide de longerons. Plusieurs signaux électromagnétiques sont envoyés aux pistes de l'antenne. Les signaux, une fois parcourues les pistes, sont envoyés à travers des câbles aux pistes d'une autre antenne. La longueur filaire des pistes est ainsi plus grande, ce qui permet d'avoir une émission plus efficace des ondes électromagnétiques dans les eaux usées. Par exemple la longueur filaire des pistes peut être de quelques kilomètres. Dans une autre variante deux ou plusieurs antennes PCB peuvent être reliées en parallèle.

L'antenne PCB 10 est liée avec des câbles 14 à un générateur de signaux électromagnétiques 16. Les câbles sont étanches et flexibles, pour permettre leur utilisation en plein air et dans les eaux du bassin 12. Ils peuvent être fixés de manière amovible aux antennes 10, par exemple avec des connecteurs, afin de permettre le démontage des plaques pour leur nettoyage par exemple. Dans un exemple, l'antenne PCB 10 est liée aux câbles 14 par des connecteurs 18, par exemple des connecteurs Binder S423 ou S693.

Le générateur des signaux électromagnétiques 16 fournit au moins deux signaux à l'antenne PCB 10, en particulier deux signaux 102, 104. Il est arrangé pour pouvoir fonctionner en plein air avec un indice de protection du boîtier IP65. Pour des conditions extrêmes de fonctionnement il peut être placé dans un coffre étanche ou à l'intérieur d'un bâtiment.

Les signaux qui alimentent l'antenne PCB 10 ont une fréquence qui appartient à une plage qui permet de stresser les bactéries des eaux usées dans le bassin d'aération, c'est-à-dire de modifier leur activité métabolique globale, en réduisant de cette façon la quantité des boues produites en excès ou de favoriser leur coagulation dans le bassin de décantation grâce à la réduction du potentiel Zeta.

La fréquence des signaux est choisie dans une plage entre 0 - 20000 Hz. De préférence la fréquence est choisie dans une plage entre 10 - 100 Hz dans le cas d'un bassin de décantation ou d'épaississement, et dans une plage entre 2000 - 7000 Hz dans le cas d'un bassin d'aération. Le choix de ces plages de fréquence est justifié par des tests qui ont été effectués et qui ont mis en évidence par exemple une réduction supérieure de 15 % de la production des boues en excès ainsi qu'une diminution du potentiel Zeta de 50%. Le choix particulier de la fréquence ou des fréquences dans ces deux plages dépend du type de bassin, de la composition des eaux usées, de leur volume, de la densité de flocs bactériens, de la densité de bactéries, de l'environnent électromagnétique local, etc.

Le calcul des fréquences se base sur des équations de la physique quantique qui permettent de déterminer les fréquences de résonance de certains éléments de manière précise, fréquences qui sont ensuite ramenées dans les plages choisies par divisions successives par 2. Les fréquences ainsi retenues sont aussi choisies pour être dans des rapports harmoniques entre elles, c'est-à-dire avec un rapport mathématique entre nombres entiers (par exemple 3/2, 4/3, etc.). On a constaté expérimentalement que l'utilisation d'un rapport harmonique améliore l'efficacité du traitement.

Le choix définitif des fréquences est réalisé en combinant ces calculs théoriques avec des données empiriques afin de se placer dans la plage optimale. Une des fréquences choisie est par exemple celle de résonance de l'oxygène.

Dans le cas de l'utilisation de deux signaux électromagnétiques, dans une variante les deux fréquences sont choisies dans une des deux plages 10 - 100 Hz, 2000 - 7000 Hz avec un rapport harmonique, par exemple une fréquence peut être 50 Hz et l'autre 75 Hz.

Le choix des autres paramètres, notamment l'intensité des signaux 102, 104, la taille des antennes 10, le nombre des antennes 10, etc. se fait notamment selon le type de bassin 12, le volume et le débit à traiter, le temps de passage des boues, l'environnement électromagnétique local, etc.

Dans une variante les signaux électromagnétiques 102, 104 sont des signaux continus pulsés positif. Dans une autre variante ils sont des signaux alternatifs. Dans une autre variante une pulsation est ajoutée sur ces signaux.

La tension de sortie du générateur de signaux électromagnétiques 16 varie entre 1 V RMS et 100 V RMS. Dans une variante elle varie entre 5 V RMS et 50 V RMS.

Dans une variante le courant du signal électromagnétique envoyé circule dans un circuit fermé. Par exemple il est envoyé par le générateur 16 à une ou plusieurs antennes en série et ensuite il retourne au générateur 16 (mode bouclé). La valeur du courant est au plus de quelques Ampères, par exemple 1 Ampère. Dans une autre variante le courant du signal électromagnétique envoyé circule dans un circuit ouvert (antenne fouet).

Dans une variante une ou plusieurs antennes peuvent être utilisées aussi dans des bassins anaérobies des stations d'épuration, dans le but d'améliorer l'efficacité de ces bassins et notamment d'augmenter la production de biogaz.

Dans une autre variante au lieu d'une seule antenne PCB 10 de dimensions 1 m par 2,3 m, quatre antennes PCB plus petites sont utilisées. Les dimensions de ces antennes plus petites sont par exemple 0,5 m par 1,150 m. De cette façon il est plus facile de coller les différentes couches des antennes PCB 10, par exemple cuivre et époxy, et de garantir une meilleure étanchéité du système.

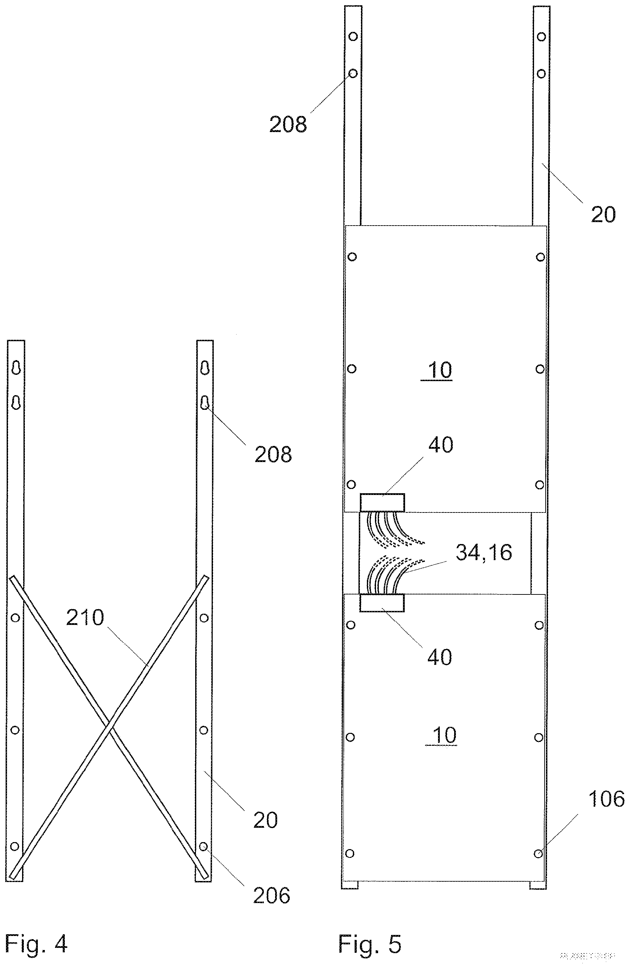

Comme discuté, dans une variante préférentielle, une ou plusieurs antennes PCB 10 sont montées sur des longerons 20. Comme illustré sur la figure 4, ces longerons comprennent des trous 206 pour la fixation de la ou des antennes PCB 10, et des trous 208 pour la fixation au bassin 12. La forme de ces trous 206, 208 peut être circulaire ou n'importe quelle autre forme. La distance entre les trous 208, qui ne sont pas immergés dans l'eau du bassin 12 pour permettre une installation pratique des antennes 10, appartient à la plage 15 - 50 cm, par exemple 20 cm. Cette plage permet d'éviter des déplacements et/ou des oscillations du support réalisé à l'aide de longerons tout en garantissant sa fixation aux parois du bassin 12.

Le support réalisé à l'aide de longerons peut être rendu plus solide à l'aide d'une structure en forme de « X » 210, illustrée sur la figure 4. Cependant cette structure n'est pas nécessaire, puisque la fixation de la ou des antennes 10 sur les longerons 20 donne au support une solidité suffisante.

Les longerons peuvent être métalliques, par exemple réalisés en acier inox. Dans une variante ils sont creux et avec une section carrée. Des goujons peuvent être soudés ou sertis sur les longerons 20 pour assurer la fixation de l'antenne PCB 10 à travers les trous 106 et 206. Les longerons sont ensuite fixés aux parois du bassin 12 à l'aide de boulons ou vis à travers les trous 208.

Une ou plusieurs antennes 10 peuvent être fixées au support de la figure 4. Au cas où le nombre des antennes PCB 10 est deux, les dimensions du support de la figure 4 seront les mêmes que celles du support de la figure 5.

La figure 5 illustre deux antennes PCB 10, montées sur un support réalisé à l'aide de longerons 20. Le nombre d'antennes PCB 10 montées sur les longerons 20 peut aussi être supérieur à deux. Dans une variante il est possible d'installer plusieurs ensembles de deux antennes PCB sur des longerons tels que l'ensemble de la figure 5 dans un bassin 12.

Dans une variante les soudures des câbles sur les pistes d'une antenne PCB 10 sont protégées par une résine 40, schématisée sur la figure 5.

Les câbles de connexion de l'antenne PCB 10 au générateur (référence 16) ou à un boîtier de raccordement entre antennes comme on le verra plus loin (référence 34) peuvent être réalisés en un matériau complètement étanche, souple et résistant aux conditions d'un bassin 12. Ces câbles peuvent par exemple être réalisés en polyéthylène PE, de fabrication spécifique.

Les pistes de l'antenne PCB 10 peuvent être réalisées en métal pré-oxydé ou comprendre une couche de vernis spécifique pour protéger les pistes, afin d'améliorer l'adhésion des couches d'époxy entre elles, ce qui améliore aussi l'étanchéité et/ou prévient l'établissement de ponts électrolytiques entre les pistes au cas où du liquide arriverait à pénétrer.

Dans une autre variante l'épaisseur époxy de l'antenne PCB 10 peut arriver jusqu'à 0.5 mm.

Les deux pistes métalliques pour les deux signaux électromagnétiques 102, 104 peuvent être réalisées soit avec une même couche, soit avec deux couches différentes, ce qui prévient encore plus l'établissement de ponts électrolytiques entre les pistes au cas où du liquide arriverait à pénétrer.

Dans une autre variante l'antenne PCB 10 comprend un joint sur ses bords pour prévenir la pénétration de liquide sur ses côtés. Pendant le séchage de ce joint, un moule plastique peut le recouvrir afin de garantir une bonne tenue.

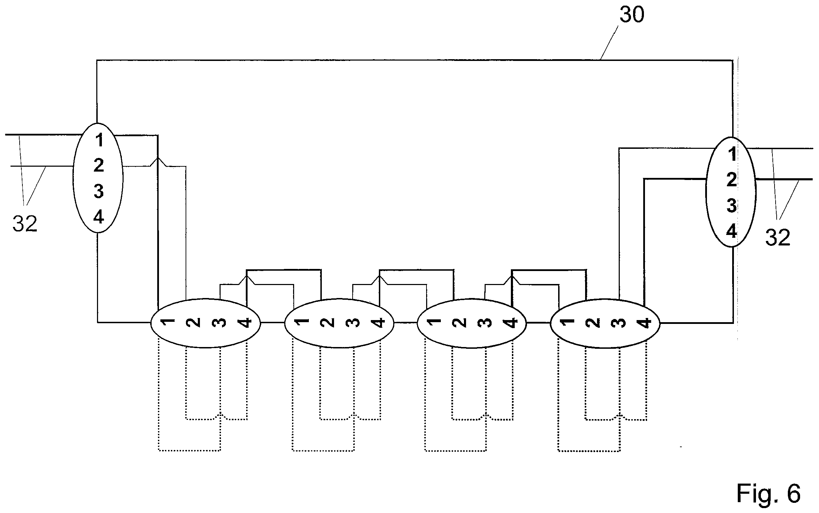

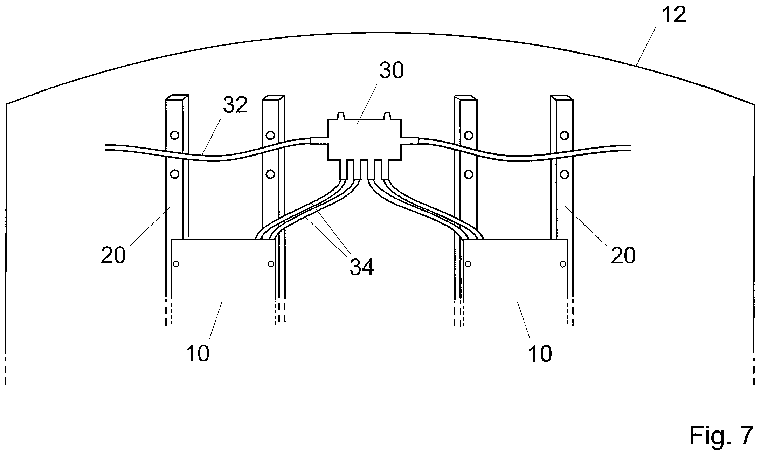

La figure 6 illustre un possible schéma de câblage d'un boîtier de raccordement 30 des antennes PCB (non illustrées) selon l'invention. Les boîtiers de raccordement sont connectés entre eux avec des câbles 32. Ils comprennent des moyens de fixation aux parois du bassin 12 non représentés. La figure 7 illustre une vue d'un boîtier de raccordement 30 connecté à des antennes PCB 10 montées sur des longerons. Les antennes sont connectées aux boîtiers de raccordement avec des câbles 34 qui transmettent les signaux 102, 104.

Après avoir connecté les boîtiers de raccordement 30 entre eux, ils sont connectés au générateur 16 des signaux électromagnétiques.

L'invention concerne aussi un procédé pour le traitement électromagnétique des eaux usées comprenant les étapes suivantes :
- fixation d'une antenne PCB 10 avec une couche isolante sur les parois d'un bassin 12 contenant lesdites eaux usées parmi des moyens de fixation 106, 20, 206, 208
- liaison de l'antenne 10 à un générateur de signaux électromagnétiques 16 par des câbles 14 et des connecteurs 18,
- alimentation de l'antenne PCB 10 avec au moins deux signaux électromagnétiques 102, 104 générés par le générateur 16 de signaux électromagnétiques ; la fréquence des signaux électromagnétiques 102, 104 est comprise dans la plage

2000-7000 Hz.Dans une variante les signaux électromagnétiques sont au nombre de deux.

Le procédé selon l'invention permet aussi l'usage d'un système pour le traitement électromagnétique des eaux usées comprenant
un bassin 12 des eaux usées,
un générateur 16 de signaux électromagnétiques 102,
une antenne PCB 10 avec une couche isolante,
des câbles 14
des moyen de fixation 106, 20, 206, 208 de l'antenne PCB 10 aux parois du bassin 12
caractérisé en ce que
le générateur 16 de signaux électromagnétiques est arrangé pour alimenter à travers les câbles 14 avec deux signaux électromagnétiques 102, 104 l'antenne PCB 10, cette antenne PCB 10 étant fixée aux parois du bassin 12 par les moyens de fixation 106, 20, 206, 208, la fréquence du signal électromagnétique 102 étant comprise dans la plage 2000-7000 Hz.

Dans une variante, ce système est utilisé pour réduire la quantité des boues produites en excès dans un bassin 12 d'aération.

Dans une autre variante, ce système est utilisé pour améliorer la décantation des flocs bactériens dans un bassin 12 de décantation ou d'épaississement.

### Numéros de référence employés sur les figures

- 1: Système de traitement électromagnétique des eaux usées
- 10: Antenne PCB
- 12: Bassin
- 14: Câbles entre l'antenne PCB et le générateur
- 16: Générateur de signaux électromagnétiques
- 18: Connecteurs
- 20: Longerons
- 30: Boîtier de raccordement
- 32: Câble(s) entre les boîtiers de raccordement
- 34: Câble(s) entre un boîtier de raccordement et une ou plusieurs antennes PCB
- 40: Résine sur les soudures des câbles sur les pistes d'une antenne PCB
- 106: Trou de l'antenne PCB
- 102: Premier signal électrique
- 104: Deuxième signal électrique
- 206: Trou des longerons pour l'antenne PCB
- 208: Trou des longerons pour le bassin
- 210: Structure en forme de « X »

## Revendications

1. Système (1) pour le traitement électromagnétique des eaux usées contenues dans un bassin (12) d'aération, comprenant
un générateur (16) de signaux électromagnétiques (102),
au moins une antenne (10),
des câbles (14),
**caractérisé en ce que**
ledit générateur (16) est arrangé pour alimenter ladite antenne (10) à travers lesdits câbles (14) avec deux signaux électromagnétiques (102, 104) dont la fréquence est comprise dans la plage 2000-7000 Hz et présentant un rapport harmonique, **en ce que** ladite antenne (10) est une antenne PCB (10) avec une couche conductrice présentant un circuit de circulation de courant comprenant deux pistes (102, 104) pour lesdits deux signaux électromagnétiques et une couche isolante disposée par-dessus lesdites pistes (102, 104), et **en ce que** le système comprend en outre des moyens de fixation (20, 206, 208, 106) de ladite antenne (10) permettant à ladite antenne (10) d'être totalement immergée dans ledit bassin (12).

2. Système selon la revendication 1, dans lequel ladite antenne PCB (10) comprend
une couche conductrice dans laquelle est gravé un circuit de circulation de courant avec deux pistes (102, 104) pour deux signaux électromagnétiquex ou
une couche de cuivre sans gravure ou
une couche de cuivre sans gravure et une couche conductrice dans laquelle est gravé un circuit de circulation de courant avec deux pistes (102, 104) pour deux signaux électromagnétiques (102) ou
deux couches conductrices dans lesquelles est gravé un circuit de circulation de courant avec au moins deux pistes (102, 104) pour deux signaux électromagnétiques (102).

3. Système selon la revendication 1, dans lequel ladite couche isolante de ladite antenne PCB (10) est réalisée en époxy.

4. Système selon l'une des revendications précédentes, dans lequel lesdits moyen de fixation (20, 206, 208, 106) de ladite antenne (10) aux parois dudit bassin (12) comprennent des longerons (20), lesdits longerons (20) comprenant des trous (206) pour la fixation d'une ou plusieurs antennes PCB (10) et des trous (208) pour la fixation desdits longerons (20) audit bassin (12).

5. Système selon l'une des revendications précédentes, comprenant un ou plusieurs boîtiers de raccordement (30) entre une ou plusieurs antennes PCB (10).

6. Système selon l'une des revendications 2 à 5, dans lequel lesdites deux pistes (102, 104) pour deux signaux électromagnétiques (102) sont réalisées en métal pré-oxydé ou elles comprennent une couche de vernis pour améliorer l'étanchéité et/ou prévenir l'établissement de ponts électrolytiques.

7. Système selon l'une des revendications 2 à 6, dans lequel les pistes pour lesdits signaux électromagnétiques (102, 104) sont au moins deux et elles sont gravées sur des couches différentes afin de prévenir l'établissement de ponts électrolytiques entre les pistes.

8. Système selon l'une des revendications précédentes, dans lequel ladite antenne PCB (10) comprend un joint sur ses bords pour prévenir la pénétration de liquide.

9. Procédé pour le traitement électromagnétique des eaux usées d'un bassin (12) d'aération comprenant les étapes suivantes
fourniture d'une antenne (10),
liaison de ladite antenne (10) à un générateur de signal (16) par des câbles (14) et des connecteurs (18),
alimentation de ladite antenne (10) avec aux moins un signal électromagnétique généré par ledit générateur (16) de signaux électromagnétiques
**caractérisé en ce que**
ladite antenne est alimentée (10) avec deux signaux électromagnétiques (102) générés par ledit générateur (16) de signaux, dont la fréquence est comprise dans la plage 2000-7000 Hz et présentant un rapport harmonique, **en ce que** l'antenne est une antenne PCB (10) avec une couche conductrice présentant un circuit de circulation de courant comprenant deux pistes (102, 104) pour lesdits deux signaux électromagnétiques et une couche isolante disposée par-dessus lesdites pistes (102, 104),, et **en ce que** l'on réalise en outre une fixation de ladite antenne (10) aux parois dudit bassin (12) par des moyens de fixation (20, 206, 208, 106), ce par quoi ladite antenne est totalement immergée dans ledit bassin (12).

10. Procédé pour le traitement électromagnétique des eaux usées d'un bassin (12) d'aération selon la revendication 10, dans lequel les bactéries des eaux usées présentent une activité métabolique globale modifiée, ce qui réduit la quantité des boues produites en excès dans ledit bassin (12) d'aération.

11. Procédé pour le traitement électromagnétique des eaux usées d'un bassin (12) d'aération selon la revendication 10, dans lequel les bactéries des eaux usées présentent une activité métabolique globale modifiée, ce qui améliore la décantation des flocs bactériens dans un bassin (12) de décantation ou d'épaississement

## Patentansprüche

1. System (1) zur elektromagnetischen Aufbereitung von Abwasser, das in einem Belebungsbecken (12) enthalten ist, umfassend
einen Generator (16) von elektromagnetischen Signalen (102),
mindestens eine Antenne (10),
Kabel (14),
**dadurch gekennzeichnet, dass**
der Generator (16) eingerichtet ist, um die Antenne (10) über die Kabel (14) mit zwei elektromagnetischen Signalen (102, 104) zu versorgen, deren Frequenz im Bereich von 2000 - 7000 Hz liegt, und die ein harmonisches Verhältnis aufweisen, dass die Antenne (10) eine PCB-Antenne (10) mit einer leitenden Schicht ist, die eine Stromzirkulationsschaltung aufweist, umfassend zwei Spuren (102, 104) für die zwei elektromagnetischen Signale und eine Isolierschicht, die über den Spuren (102, 104) angeordnet ist, und dass das System ferner Mittel zur Befestigung (20, 206, 208, 106) der Antenne (10) umfasst, die es der Antenne (10) ermöglichen, zur Gänze in das Becken (12) getaucht zu sein.

2. System nach Anspruch 1, bei dem die PCB-Antenne (10) umfasst:
eine leitende Schicht, in die eine Stromzirkulationsschaltung mit zwei Spuren (102, 104) für zwei elektromagnetische Signale graviert ist, oder
eine Kupferschicht ohne Gravur oder
eine Kupferschicht ohne Gravur und eine leitende Schicht, in die eine Stromzirkulationsschaltung mit zwei Spuren (102, 104) für zwei elektromagnetische Signale (102) graviert ist, oder
zwei leitende Schichten, in die eine Stromzirkulationsschaltung mit mindestens zwei Spuren (102, 104) für zwei elektromagnetische Signale (102) graviert ist.

3. System nach Anspruch 1, bei dem die Isolierschicht der PCB-Antenne (10) aus Epoxidharz hergestellt ist.

4. System nach einem der vorhergehenden Ansprüche, bei dem die Mittel zur Befestigung (20, 206, 208, 106) der Antenne (10) an den Wänden des Beckens (12) Längsträger (20) umfassen, wobei die Längsträger (20) Löcher (206) zur Befestigung einer oder mehrerer PCB-Antennen (10) und Löcher (208) zur Befestigung der Längsträger (20) am Becken (12) umfassen.

5. System nach einem der vorhergehenden Ansprüche, umfassend einen oder mehrere Anschlusskästen (30) zwischen einer oder mehreren PCB-Antennen (10).

6. System nach einem der Ansprüche 2 bis 5, bei dem die zwei Spuren (102, 104) für zwei elektromagnetische Signale (102) aus voroxidiertem Metall hergestellt sind oder eine Lackschicht umfassen, um die Dichtigkeit zu verbessern und/oder der Bildung von Elektrolytschlüsseln vorzubeugen.

7. System nach einem der Ansprüche 2 bis 6, bei dem die Spuren für die elektromagnetischen Signale (102, 104) mindestens zwei sind, und auf verschiedenen Schichten graviert sind, um der Bildung von Elektrolytschlüsseln zwischen den Spuren vorzubeugen.

8. System nach einem der vorhergehenden Ansprüche, bei dem die PCB-Antenne (10) eine Dichtung an ihren Rändern umfasst, um dem Eindringen von Flüssigkeit vorzubeugen.

9. Verfahren zur elektromagnetischen Aufbereitung von Abwasser, das in einem Belebungsbecken (12) enthalten ist, umfassend die folgenden Schritte:
Bereitstellung einer Antenne (10),
Verbindung der Antenne (10) mit einem Signalgenerator (16) durch Kabel (14) und Stecker (18),
Versorgung der Antenne (10) mit mindestens einem elektromagnetischen Signal, das vom Generator (16) von elektromagnetischen Signalen erzeugt wird,
**dadurch gekennzeichnet, dass**
die Antenne (10) mit zwei elektromagnetischen Signalen (102) versorgt wird, die von dem Signalgenerator (16) erzeugt werden, deren Frequenz im Bereich von 2000 - 7000 Hz liegt, und die ein harmonisches Verhältnis aufweisen, dass die Antenne eine PCB-Antenne (10) mit einer leitenden Schicht ist, die eine Stromzirkulationsschaltung aufweist, umfassend zwei Spuren (102, 104) für die zwei elektromagnetischen Signale und eine Isolierschicht, die über den Spuren (102, 104) angeordnet ist, und dass ferner eine Befestigung der Antenne (10) an den Wänden des Beckens (12) durch Befestigungsmittel (20, 206, 208, 106) durchgeführt wird, durch die die Antenne zur Gänze in das Becken (12) getaucht ist.

10. Verfahren zur elektromagnetischen Aufbereitung von Abwasser eines Belebungsbeckens (12) nach Anspruch 10, bei dem die Bakterien des Abwassers eine modifizierte globale metabolische Aktivität aufweisen, was die Menge der Schlämme, die im Übermaß in dem Belebungsbecken (12) erzeugt werden, verringert.

11. Verfahren zur elektromagnetischen Aufbereitung von Abwasser eines Belebungsbeckens (12) nach Anspruch 10, bei dem die Bakterien des Abwassers eine modifizierte globale metabolische Aktivität aufweisen, was das Absetzen der Bakterienflocken in einem Absetz- oder Verdickungsbecken (12) verbessert.

## Claims

1. System (1) for electromagnetic treatment of wastewater contained in an aeration tank (12) comprising
a generator (16) of electromagnetic signals (102),
at least one antenna (10),
cables (14)
**characterised in that**
said generator (16) is arranged to supply said antenna (10) by means of said cables (14) with two electromagnetic signals (102, 104) whose frequency is comprised within the range 2000-7000 Hz and presenting a harmonic ratio, and **in that** said antenna (10) is a PCB antenna (10) with a conductive layer presenting a circulating circuit of current comprising two tracks (102, 104) for said two electromagnetic signals and an insulating layer arranged above said tracks (102, 104), and **in that** the system comprises furthermore fixing means (20, 206, 208, 106) said antenna (10) allowing said antenna (10) to be completely immersed in said tank (12).

2. System according to claim 1, wherein said PCB antenna (10) comprises
a conductive layer in which is engraved a circulating circuit of current with two tracks (102, 104) for two electromagnetic signals or
a copper layer without engraving or
a copper layer without engraving and a conductive layer in which is engraved a circulating circuit of current with two tracks (102, 104) for two electromagnetic signals (102) or
two conductive layers wherein is engraved a circulating circuit of current with at least two tracks (102, 104) for two electromagnetic signals (102).

3. System according to claim 1, wherein said insulating layer of the PCB antenna (10) is made of epoxy.

4. System according to one of the previous claims, in which said fixing means (20, 206, 208, 106) of said antenna (10) to walls of said tank (12) comprises stringers (20), said stringers (20) comprising holes (206) for attaching one or several PCB antennas (10) and holes (208) for attaching said stringers (20) to said tank (12).

5. System according to one of the previous claims, comprising one or several connection boxes (30) between one or several PCB antennas (10).

6. System according to one of the claims 2 to 5, wherein said two tracks (102, 104) for two electromagnetic signals (102) are made of pre-oxidised metal or they comprise a layer of varnish to improve the waterproofness and/or prevent the establishment of electrolytic bridges.

7. System according to one of the claims 2 to 6, wherein the tracks for said electromagnetic signals (102, 104) are at least two in number and they are engraved on the different layers in order to prevent the establishment of electrolytic bridges between the tracks.

8. System according to one of the previous claims, wherein said PCB antenna (10) comprises a seal on its edges to prevent the penetration of liquid.

9. Process for electromagnetic treatment of wastewater in an aeration tank (12) comprising the following steps
supply of an antenna (10),
connect of said antenna (10) to a signal generator (16) by cables (14) and connectors (18),
supply of said antenna (10) with at least one electromagnetic signal generated by said generator (16) of electromagnetic signals
**characterised in that**
said antenna is supplied (10) by two electromagnetic signals (102) generated by said signal generator (16), whose frequency is comprised in the range 2000-7000 Hz and presenting a harmonic ratio, and **in that** the antenna is a PCB antenna (10) with a conductive layer presenting a circulating circuit of current comprising two tracks (102, 104) for said two electromagnetic signals (102, 104), and **in that** moreover an attachment is made of said antenna (10) to the walls of said tank (12) by fixing means (20, 206, 208, 106), so that said antenna is totally immersed in said tank (12).

10. Process for treatment of electromagnetic treatment of wastewater in an aeration tank (12) according to claim 10, in which bacteria in the wastewater present a modified global metabolic activity, that reduces the quantity of excess sludge produced in said aeration tank (12).

11. Process for treatment of electromagnetic treatment of wastewater of an aeration tank (12) according to claim 10, wherein bacteria of wastewater present a modified global metabolic activity, which improves the settlement of bacterial flocs in a decantation or thickening tank (12).
